# FASCICULE DE BREVET EUROPEEN

(11) **EP 2 219 886 B1**
(45) Date de publication et mention de la délivrance du brevet: **08.08.2012**
(21) Numéro de dépôt: 08850274.5
(22) Date de dépôt: 13.11.2008
(51) Int. Cl.: B60C 15/06

(54) **VEHICULE DONT LES PNEUMATIQUES COMPORTENT DES FLANCS RENFORCES**
REIFEN MIT VERSTÄRKTEN SEITENWÄNDEN AUFWEISENDES FAHRZEUG
VEHICLE HAVING TYRES WITH REINFORCED SIDEWALLS

(30) Priorité: 14.11.2007 FR 0759030
(43) Date de publication de la demande: 25.08.2010
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BORDOZ, Francis, F-63100 Clermont-Ferrand (FR)
(74) Mandataire: Le Cam, Stéphane Georges Elie
(86) Numéro de dépôt international: PCT/EP2008/065484
(87) Numéro de publication internationale: WO 2009/063012

(56) Documents cités:
- EP-A- 0 483 710
- JP-A- 2001 121 928
- JP-A- 2003 320 821
- JP-A- 2004 130 859

## Description

La présente invention concerne un véhicule à deux roues tel qu'une motocyclette équipée de deux pneumatiques.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc.), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Comme dans le cas de tous les autres pneumatiques, on assiste à une radialisation des pneumatiques pour motos, l'architecture de tels pneumatiques comprenant une armature de carcasse formée d'une ou deux nappes d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux nappes de sommet d'éléments de renforcement parallèles entre eux dans chaque nappe mais croisés d'une nappe à la suivante en faisant avec la direction circonférentielle des angles aigus, de tels pneumatiques étant plus particulièrement adaptés pour l'avant des motos. Les dites deux nappes de sommet peuvent être surmontées radialement d'au moins une nappe d'éléments circonférentiels, généralement obtenus par enroulement hélicoïdal d'une bandelette d'au moins un élément de renforcement enrobé de caoutchouc. Le brevet FR 2 561 588 décrit ainsi une telle armature de sommet, avec au moins une nappe dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la nappe d'éléments circonférentiels, d'une couche d'amortissement formée principalement de deux nappes d'éléments croisés d'une nappe à la suivante en faisant entre eux des angles compris entre 60° et 90°, les dites nappes croisées étant formées d'éléments de renforcement textiles ayant un module d'élasticité d'au moins 6000 N/mm².

Le document EP 0 456 933, en vue de conférer à un pneumatique pour moto une excellente stabilité à grande vitesse ainsi qu'une excellente propriété de contact avec le sol, enseigne par exemple de constituer une armature de sommet avec au moins deux nappes : une première nappe, radialement la plus proche de l'armature de carcasse étant composée de câbles orientés avec un angle compris entre 40° et 90° par rapport à la direction circonférentielle et la deuxième nappe, la plus proche radialement de la bande de roulement étant composée de câbles enroulés hélicoïdalement dans la direction circonférentielle.

Le brevet US 5 301 730, en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.

Le document EP-A-483 710 décrit un pneumatique pour motocyclette comportant une armature de carcasse, et dans chaque flanc une couche complémentaire d'éléments de renforcement axialement adjacente à la structure de renfort de type carcasse, les éléments de renforcement de la couche complémentaire formant avec la direction circonférentielle un angle compris entre 30° et 60°, l'orientation des éléments de renforcement de la couche complémentaire dans un flanc étant symétrique de l'orientation des éléments de renforcement de la couche complémentaire dans l'autre flanc par rapport au plan équatorial.

La direction circonférentielle du pneumatique, ou direction longitudinale, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

Un plan radial ou méridien est un plan qui contient l'axe de rotation du pneumatique.

L'axe de rotation du pneumatique est l'axe autour duquel il tourne en utilisation normale.

La direction transversale ou axiale du pneumatique est parallèle à l'axe de rotation du pneumatique.

L'invention a pour but d'améliorer encore la conduite d'une motocyclette et notamment la capacité des pneumatiques pour motocyclettes à transmettre des efforts moteur ou freineur, sans nuire pour autant aux autres propriétés, nécessaires à la satisfaction des utilisateurs.

Ce but a été atteint selon l'invention par un véhicule de type motocyclette comportant deux trains équipés chacun d'un ensemble monté constitué d'une roue et d'un pneumatique, chacun des pneumatiques comportant au moins une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, lesdits pneumatiques comportant, au moins dans une partie de chaque flanc, au moins une couche complémentaire d'éléments de renforcement axialement adjacente à la structure de renfort de type carcasse, les éléments de renforcement de la couche complémentaire faisant avec la direction circonférentielle un angle compris entre 20° et 60°, l'orientation des éléments de renforcement de la couche complémentaire dans un flanc étant symétrique de l'orientation des éléments de renforcement de la couche complémentaire dans l'autre flanc par rapport au plan équatorial et dans le pneumatique équipant le train arrière, l'angle formé par le plan comprenant un élément de renforcement d'une couche complémentaire avec un plan radial comprenant l'extrémité radialement intérieur dudit élément de renforcement, étant orienté dans le sens de rotation de l'ensemble monté correspondant à l'avancement du véhicule et dans le pneumatique équipant le train avant, l'angle formé par le plan comprenant un élément de renforcement d'une couche complémentaire avec un plan radial comprenant l'extrémité radialement intérieur dudit élément de renforcement, est orienté dans le sens opposé au sens de rotation de l'ensemble monté correspondant à l'avancement du véhicule.

Au sens de l'invention, deux couches sont adjacentes lorsqu'elles sont séparées l'une de l'autre par au plus les couches de calandrage constituant lesdites couches ou par les couches de gommage enrobant les éléments de renforcements. Selon l'invention, la distance mesurée de câble à câble, c'est-à-dire entre les câbles de deux couches adjacentes, correspondant à l'épaisseur des mélanges caoutchouteux de calandrage ou de gommage, radialement extérieure aux câbles d'une première couche radialement intérieure et radialement intérieure aux câbles de la deuxième couche radialement extérieure est supérieure ou égale à 0.3 mm.

Selon un mode de réalisation préféré de l'invention, l'abscisse curviligne d'une couche complémentaire d'au moins un des pneumatiques sur une coupe méridienne du pneumatique est supérieure à 20 mm.

De préférence encore, la couche complémentaire d'au moins un des pneumatiques s'étend au moins depuis l'extrémité radialement extérieure de la zone d'ancrage de la structure de renfort de type carcasse dans un bourrelet.

Un mode de réalisation avantageux de l'invention prévoit que la couche complémentaire d'au moins un des pneumatiques s'étend jusqu'au moins une extrémité d'épaulement.

Au sens de l'invention, une extrémité d'épaulement est définie, dans la zone de l'épaule du pneumatique, par la projection orthogonale sur la surface de l'armature de carcasse de l'intersection des tangentes aux surfaces d'une extrémité axialement extérieure de la bande de roulement (sommet des sculptures) d'une part et de l'extrémité radialement extérieure d'un flanc d'autre part.

L'invention propose, selon ce mode de réalisation de l'invention, que la couche complémentaire s'étende jusqu'au moins un point de tangence de l'abscisse curviligne de la structure de renfort de type carcasse avec une perpendiculaire à l'axe de rotation.

Les essais réalisés sur des motocyclettes conforme à l'invention ont mis en évidence qu'elle permet d'une part d'augmenter la motricité du pneumatique équipant le train arrière, c'est-à-dire la capacité du pneumatique à transmettre un effort moteur, et d'autre part d'augmenter la capacité à transmettre un effort de freinage pour ce qui concerne le pneumatique du train avant.

Ces essais ont montré qu'une motocyclette équipé d'un pneumatique sur son train arrière conformément à l'invention permet effectivement d'augmenter la motricité dudit pneumatique dès lors que la projection orthogonale sur un plan circonférentiel de la direction moyenne d'un élément de renforcement de la couche complémentaire forme un angle avec un plan radial comprenant l'extrémité radialement intérieur dudit élément de renforcement, ledit angle étant orienté depuis le plan radial jusqu'à ladite projection dans le sens opposé au sens de rotation de l'ensemble monté correspondant à l'avancement du véhicule.

De même, les essais ont montré qu'une motocyclette équipé d'un pneumatique sur son train avant conformément à l'invention permet effectivement d'augmenter la capacité de freinage du pneumatique dès lors que la projection orthogonale sur un plan circonférentiel de la direction moyenne d'un élément de renforcement de la couche complémentaire forme un angle avec un plan radial comprenant l'extrémité radialement intérieur dudit élément de renforcement, ledit angle étant orienté depuis le plan radial jusqu'à ladite projection dans le sens de rotation de l'ensemble monté correspondant à l'avancement du véhicule.

Une variante de l'invention prévoit avantageusement que la couche complémentaire d'au moins un des pneumatiques s'étend sous la bande de roulement.

Selon un premier mode de réalisation de cette variante de l'invention, le pneumatique comportant sous la bande de roulement une structure de renforcement de sommet constituée d'au moins une couche d'éléments de renforcement dite couche de travail, la couche complémentaire s'étend jusqu'au moins une extrémité axiale de la couche de sommet de travail axialement la plus large.

Selon un deuxième mode de réalisation de cette variante de l'invention, le pneumatique comportant sous la bande de roulement une structure de renforcement de sommet constituée d'au moins une couche d'éléments de renforcement dite couche de travail, la couche complémentaire s'étend pour se superposer radialement à au moins une partie d'une couche de travail. Les couches complémentaires s'étendant dans chacun des flancs constituent alors en outre deux demi couches de sommet assimilables à des couches de travail. Ces demi couches peuvent être soit des couches supplémentaires soit se substituer à une couche de travail initialement prévue dans l'architecture du pneumatique. Dans ce dernier cas, les demi couches correspondant aux couches complémentaires sont alors par exemple associées à au moins deux autres demi couches d'éléments de renforcement de sommet, qui elles ne s'étendent pas dans les flancs du pneumatique, les éléments de renforcement de deux demi couches radialement superposées étant croisées les uns par rapport aux autres.

Selon un mode de réalisation de l'invention selon lequel la structure de renfort de type carcasse d'au moins un des pneumatiques comporte au moins une nappe d'éléments de renforcement présentant un retournement autour d'une tringle, l'extrémité radialement intérieure d'au moins couche complémentaire est positionnée axialement entre la nappe d'éléments de renforcement et son retournement. De cette façon, le couplage avec la nappe de carcasse est plus important, la couche complémentaire étant directement au contact de nappe de carcasse, y compris dans la zone de retournement.

Dans le cas d'un pneumatique comportant plusieurs couches constituants la structure de renfort de type carcasse, au moins une couche complémentaire est avantageusement mise en place axialement entre lesdites couches constituants la structure de renfort de type carcasse.

Selon l'un ou l'autre de ces modes de réalisation de l'invention, au moins une couche complémentaire d'au moins un des pneumatiques est soit mise en place axialement à l'intérieur de la structure de renfort de type carcasse, soit axialement à l'extérieur de la structure de renfort de type carcasse.

Dans le cas d'une couche complémentaire qui s'étend sous la bande de roulement et qui est axialement intérieure à la structure de renfort de type carcasse dans le flanc, la couche complémentaire est avantageusement radialement extérieure à la structure de renfort de type carcasse sous la bande de roulement.

Un tel pneumatique est alors avantageusement réalisé selon une technique du type sur noyau dur ou toroïdal qui peut permettre de manière simple la réalisation de superposition de couches dans un sens sur une partie de leur longueur et dans un autre sur le restant de leur longueur.

Une première variante de réalisation de l'invention prévoit qu'au moins un des pneumatiques du véhicule comporte, dans une partie de chaque flanc, une unique couche complémentaire. Une telle variante présente notamment un intérêt économique par rapport au cas de plusieurs couches complémentaires notamment en termes de matière ainsi qu'en termes de productivité puisque le nombre d'éléments mis en place est inférieur.

Une deuxième variante de l'invention prévoit qu'au moins un des pneumatiques du véhicule comporte, au moins dans une partie de chaque flanc, au moins deux couches complémentaires, les éléments de renforcements des deux couches complémentaires étant orientés dans le même sens par rapport à la direction circonférentielle. Les essais ont montré qu'une telle variante de réalisation peut permettre de conserver les avantages de la première variante en termes de passages de couple tout en permettant d'améliorer les rigidités du pneumatique selon l'une ou l'autre des directions radiale ou latérale.

Au sens de l'invention, une orientation dans le même sens d'éléments de renforcement par rapport à la direction circonférentielle signifie que les angles formés par la direction desdits éléments de renforcement avec la direction circonférentielle sont de mêmes signes.

Avantageusement selon cette variante de l'invention, deux couches complémentaires sont adjacentes à la structure de renfort de type carcasse au moins dans une partie de chaque flanc ; dans le cas d'une armature de carcasse ne comportant qu'une couche, l'une des couches complémentaires est axialement intérieure à la couche de carcasse et l'autre est axialement extérieure à ladite couche de carcasse. Dans le cas d'une armature de carcasse comportant plusieurs couches, les deux couches complémentaires peuvent être mises en place axialement entre deux couches de carcasse.

Selon un mode de réalisation de l'invention, le pneumatique comportant sous la bande de roulement une structure de renforcement de sommet constituée d'au moins une couche d'éléments de renforcement dite couche de travail, la structure de renforcement de sommet comporte au moins deux couches d'éléments de renforcement telles que d'une couche à la suivante les éléments de renforcement forment entre eux des angles compris entre 20 et 160° et de préférence entre 40 et 100°.

Les pneumatiques équipant la motocyclette selon l'invention sont avantageusement des pneumatiques de type radial. Les éléments de renforcement de la structure de renfort de type carcasse font avantageusement avec la direction circonférentielle un angle compris entre 65° et 90°.

Une réalisation préférée de l'invention prévoit qu'au moins un des pneumatiques est notamment constitué d'une structure de renforcement de sommet qui comporte en outre au moins une couche d'éléments de renforcement circonférentiels ; selon l'invention, la couche d'éléments de renforcement circonférentiels est constituée d'au moins un élément de renforcement orienté selon un angle formé avec la direction longitudinale inférieur à 5°.

La présence d'une couche d'éléments de renforcement circonférentiels est notamment préférable pour la réalisation d'un pneumatique destiné à être utilisé à l'arrière d'une motocyclette.

Une réalisation avantageuse de l'invention prévoit que la couche d'éléments de renforcement circonférentiels est positionnée au moins partiellement sur une couche de travail et par exemple sur les couches complémentaires lorsque celles-ci s'étendent sous la bande de roulement. Lorsque la couche d'éléments de renforcement circonférentiels est réalisée sur deux couches de travail et placée directement sous la bande de roulement, elle peut notamment contribuer à l'amélioration de la stabilité à haute vitesse.

La couche d'éléments de renforcement circonférentiels peut ainsi être réalisée directement sous la bande de roulement pour former outre sa fonction première une couche de protection de la carcasse et des autres couches de la structure de renforcement de sommet, contre des agressions mécaniques éventuelles.

La couche d'éléments de renforcement circonférentiels peut encore être réalisée entre les couches de travail ou entre une couche de travail et les couches complémentaires lorsque celles-ci s'étendent sous la bande de roulement, notamment par souci économique, la quantité de matière et le temps de pose étant ainsi diminués.

Une autre réalisation avantageuse de l'invention prévoit que la couche d'éléments de renforcement circonférentiels est positionnée au moins partiellement radialement à l'intérieur de la couche de travail radialement inférieure, voire radialement à l'intérieur des couches complémentaires lorsque celles-ci s'étendent sous la bande de roulement. Selon cette réalisation, la couche d'éléments de renforcement circonférentiels est réalisée radialement à l'intérieur des couches de travail et peut notamment permettre d'améliorer l'adhérence et la motricité du pneumatique.

Une autre variante de l'invention prévoit qu'au moins une couche d'éléments de renforcement circonférentiels est positionnée au moins partiellement radialement à l'intérieur de la structure de renfort de type carcasse. Cette variante de réalisation peut encore reprendre les différents positionnements évoqués précédemment par rapport aux couches de travail et/ou par rapport aux couches complémentaires lorsque celles-ci s'étendent sous la bande de roulement. La carcasse peut ainsi couvrir la structure complète de renforcement de sommet. De préférence, l'invention prévoit qu'au moins une couche de renforcement de sommet ou que les couches complémentaires lorsqu'elles s'étendent sous la bande de roulement sont mises en place entre la carcasse et la bande de roulement pour assurer une protection de la carcasse.

Il faut noter qu'un pneumatique équipant une motocyclette selon l'invention, notamment lorsqu'au moins une partie de la structure de renforcement de sommet est réalisée radialement à l'intérieur de la structure de carcasse, est avantageusement réalisé selon une technique de fabrication du type sur noyau dur ou forme rigide.

Une réalisation avantageuse de l'invention prévoit que la structure de renfort de type carcasse d'au moins un des pneumatiques est constituée de deux demi-couches s'étendant par exemple des épaules aux bourrelets. Selon la nature, la quantité et la disposition des éléments de renfort de sommet, l'invention prévoit effectivement la suppression de la structure de carcasse dans au moins une partie de la zone se trouvant sous la bande de roulement d'au moins un des pneumatiques. La réalisation d'une telle structure de carcasse peut être faite selon l'enseignement du document EP-A-0 844 106. Les positions relatives précédemment énoncées des différentes couches de la structure de renforcement de sommet sont également compatibles avec une telle structure de carcasse.

Avantageusement selon l'invention, les éléments de renforcement des couches complémentaires présentent un module d'élasticité supérieur à 6000 N/mm² et sont de préférence en matériau textile, notamment pour limiter l'augmentation du poids du pneumatique.

Selon une réalisation préférée de l'invention, les éléments de renforcement des couches de travail sont en matériau textile.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

D'autres détails et caractéristiques avantageux de l'invention ressortiront ci-après de la description des exemples de réalisation de l'invention en référence aux figures 1 à 4 qui représentent :
- figure 1, une vue méridienne d'un schéma d'un pneumatique destiné à équiper une moto selon l'invention,
- figure 2, une représentation schématique d'un pneumatique destiné à équiper le train arrière d'une moto,
- figure 3, une représentation schématique d'un pneumatique destiné à équiper le train avant d'une moto,
- figure 4, une représentation schématique d'une motocyclette selon l'invention.

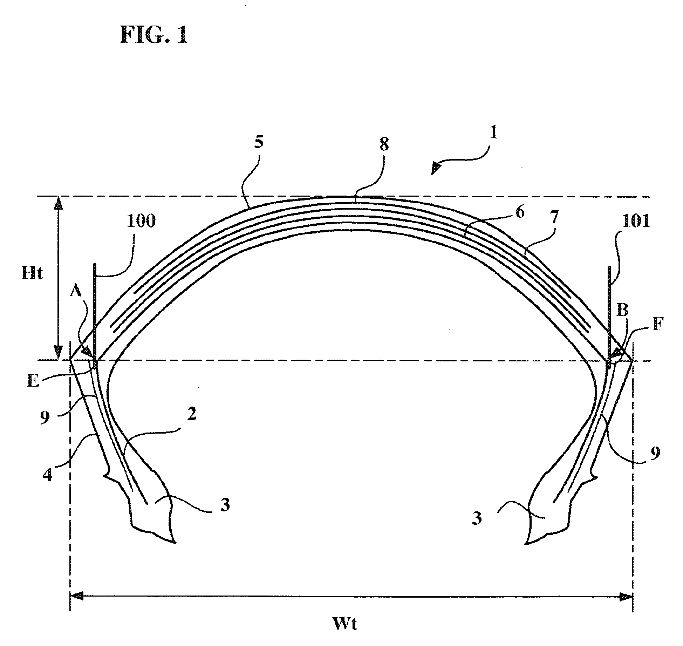

Les figures 1 à 4 ne sont pas représentées à l'échelle pour en simplifier la compréhension.

La figure 1 représente un pneumatique 1 comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. L'ancrage de la couche de carcasse 2 n'est que schématisé sur les figures ; il peut s'agir par exemple d'un retournement autour d'une tringle ou bien d'un agencement dans lequel on dispose de façon adjacente à ladite couche de carcasse 2 des fils circonférentiels, le tout étant noyé dans un mélange caoutchouteux d'ancrage ou de liaison Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Entre la carcasse et la bande de roulement est mise en place une armature de sommet constituée dans le cas présent de deux couches de travail 6, 7 et d'une couche d'éléments de renforcement circonférentiels 8. La couche d'éléments de renforcement circonférentiels est, sur la figure 1, la partie de l'armature de sommet radialement extérieure et les deux couches de travail 6, 7 sont intercalées entre la couche de carcasse 2 et la couche d'éléments de renforcement circonférentiels 8. La couche d'éléments de renforcement circonférentiels est avantageusement constituée d'un seul fil enroulé pour former un angle avec la direction longitudinale sensiblement égal à 0°. La couche d'éléments de renforcement circonférentiels peut encore être réalisée par l'enroulement simultané de plusieurs fils nus ou sous forme de bandelettes lorsqu'ils sont noyés dans du caoutchouc.

Les couches de travail 6, 7 sont constituées de renforts textiles. la couche d'éléments de renforcement circonférentiels 8 est constituée de renforts métalliques.

Conformément à l'invention, le pneumatique comporte encore dans chacun des flancs 4 des couches complémentaires 9 qui s'étendent depuis une extrémité d'épaulement E, F jusque la zone d'ancrage de la couche de carcasse 2 dans le bourrelet 3. Dans le cas d'un pneumatique pour motocyclette tel que celui représenté sur la figure 1, la position radiale d'une extrémité d'épaulement E, F correspond au point de tangence A, B de l'abscisse curviligne de la couche de carcasse 2 avec une perpendiculaire à l'axe de rotation 100, 101.

Les couches complémentaires 9 sont constituées de renforts de type aramide.

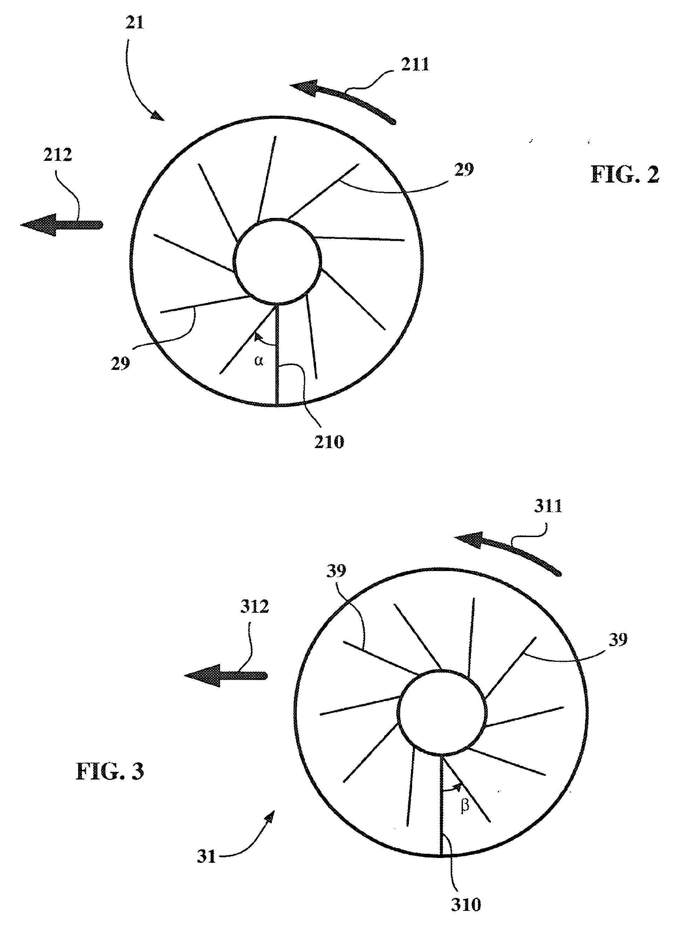

La figure 2 illustre une vue schématique en projection orthogonale sur un plan circonférentiel d'une première variante de réalisation selon l'invention d'un pneumatique 21 destiné à équiper le train arrière d'une moto, et dans laquelle sont représentés les éléments de renforcement 29 d'une couche complémentaire, telle que celle décrite en référence à la figure 1.

Sur la figure 2, la direction moyenne d'un élément de renforcement 29 de la couche complémentaire forme un angle α égal à 45° avec un plan radial comprenant l'extrémité radialement intérieur dudit élément de renforcement, ledit angle α étant orienté depuis le plan radial 210 jusqu'à la direction moyenne de l'élément de renforcement 29 dans le sens opposé au sens de rotation de l'ensemble monté, indiqué par la flèche 211, correspondant à l'avancement du véhicule, indiqué par la flèche 212.

Un pneumatique 21 destiné à équiper le train arrière d'une moto tel que celui représenté sur la figure améliore la transmission des efforts moteurs.

La figure 3 illustre une vue schématique en projection orthogonale sur un plan circonférentiel d'une seconde variante de réalisation selon l'invention d'un pneumatique 31 destiné à équiper le train avant d'une moto, et dans laquelle sont représentés les éléments de renforcement 39 d'une couche complémentaire, telle que celle décrite en référence à la figure 1.

Sur la figure 3, la direction moyenne d'un élément de renforcement 39 de la couche complémentaire forme un angle β égal à 45° avec un plan radial comprenant l'extrémité radialement intérieur dudit élément de renforcement, ledit angle β étant orienté depuis le plan radial 310 jusqu'à la direction moyenne de l'élément de renforcement 39 dans le sens de rotation de l'ensemble monté, indiqué par la flèche 311, correspondant à l'avancement du véhicule, indiqué par la flèche 312.

Un pneumatique 31 destiné à équiper le train avant d'une moto tel que celui représenté sur la figure 3 améliore la transmission des efforts freineurs.

Selon l'une ou l'autre des réalisations représentées sur les figures 2 et 3, la réalisation des couches complémentaires 9 selon l'invention peut être conforme à la représentation de la figure 1. Selon d'autres modes de réalisation de l'invention, les couches complémentaires peuvent être mises en place axialement à l'intérieur la structure de renfort de type carcasse. Dans le cas d'une structure de renfort de type carcasse constitué de deux nappes de carcasse, les couches complémentaires peuvent par exemple encore être mises en place axialement entre les nappes de carcasse.

Les couches complémentaires selon l'invention peuvent également s'étendre sous la bande de roulement. Selon ces types de réalisation, les couches complémentaires peuvent par exemple être axialement intérieures à la structure de renfort de type carcasse dans les flancs et radialement extérieures à ladite structure de renfort de type carcasse sous la bande de roulement.

Concernant la mise en oeuvre de ce dernier type de réalisation d'un pneumatique selon l'invention, celle-ci est avantageusement obtenue par une fabrication du type sur noyau dur.

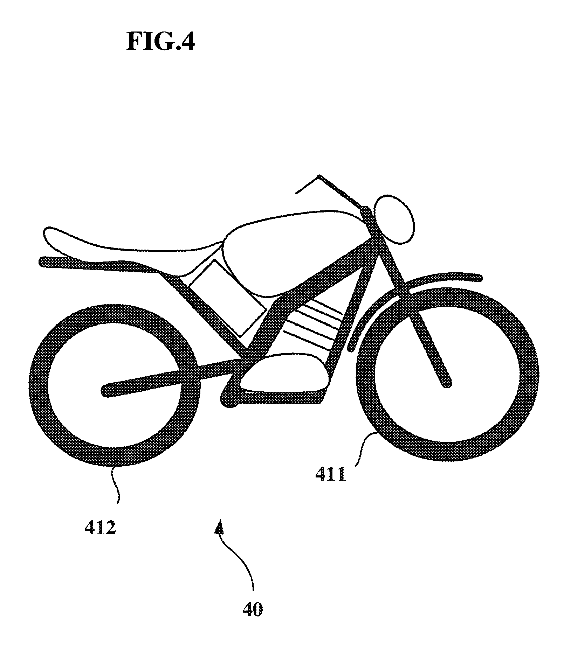

La figure 4 représente une vue schématique d'une motocyclette 40 selon l'invention comportant deux pneumatiques 411, 412. Conformément à l'invention, le pneumatique avant 411 qui est uniquement sollicité pour transmettre des efforts freineurs est conforme à celui décrit sur la figure 3 et le pneumatique arrière qui participe essentiellement à la transmission des efforts moteurs est conforme à celui décrit sur la figure 2.

Des essais de roulage ont été effectués sur circuit avec une motocyclette du type de celle illustrée sur la figure 4. Des analyses subjectives apportées par plusieurs pilotes ont mis en évidence une amélioration notable tant de la motricité que du freinage et notamment du comportement dans les passages de courbes.

## Revendications

1. Véhicule de type motocyclette comportant deux trains équipés chacun d'un ensemble monté constitué d'une roue et d'un pneumatique (1), chacun des pneumatiques comportant au moins une structure de renfort de type carcasse (2), formée d'éléments de renforcement, ancrée de chaque côté du pneumatique à un bourrelet (3), chaque bourrelet se prolongeant radialement vers l'extérieur par un flanc (4), les flancs rejoignant radialement vers l'extérieur une bande de roulement (5), chacun des pneumatiques comportant, au moins dans une partie de chaque flanc au moins une couche complémentaire (9) d'éléments de renforcement (29,39) axialement adjacente à la structure de renfort de type carcasse, les éléments de renforcement de la couche complémentaire faisant avec la direction circonférentielle un angle compris entre 20° et 60°, l'orientation des éléments de renforcement de la couche complémentaire dans un flanc étant symétrique de l'orientation des éléments de renforcement de la couche complémentaire dans l'autre flanc par rapport au plan équatorial, **caractérisé en ce que** l'angle (α) formé par le plan comprenant un élément de renforcement (29) d'une couche complémentaire du pneumatique équipant le train arrière avec un plan radial (210) comprenant l'extrémité radialement intérieur dudit élément de renforcement, est orienté dans le sens de rotation de l'ensemble monté correspondant à l'avancement du véhicule et **en ce que** l'angle (β) formé par le plan comprenant un élément de renforcement (39) d'une couche complémentaire du pneumatique équipant le train avant avec un plan radial (310) comprenant l'extrémité radialement intérieur dudit élément de renforcement, est orienté dans le sens opposé au sens de rotation de l'ensemble monté correspondant à l'avancement du véhicule.

2. Véhicule selon la revendication 1, **caractérisé en ce que** l'abscisse curviligne d'une couche complémentaire d'au moins un des pneumatiques sur une coupe méridienne du pneumatique est supérieure à 20 mm.

3. Véhicule selon la revendication 1 ou 2, **caractérisé en ce que** la couche complémentaire d'au moins un des pneumatiques s'étend au moins depuis l'extrémité radialement extérieure de la zone d'ancrage de la structure de renfort de type carcasse dans un bourrelet.

4. Véhicule selon l'une des revendications 1 à 3, **caractérisé en ce que** la couche complémentaire d'au moins un des pneumatiques s'étend jusqu'au moins une extrémité d'épaulement.

5. Véhicule selon l'une des revendications 1 à 3, **caractérisé en ce que** la couche complémentaire d'au moins un des pneumatiques s'étend jusqu'au moins un point de tangence de l'abscisse curviligne de la structure de renfort de type carcasse avec une perpendiculaire à l'axe de rotation.

6. Véhicule selon l'une des revendications 1 à 5, **caractérisé en ce que** la couche complémentaire d'au moins un des pneumatiques s'étend sous la bande de roulement.

7. Véhicule selon l'une des revendications 4 à 6, chacun des pneumatiques comportant sous la bande de roulement une structure de renforcement de sommet constituée d'au moins une couche d'éléments de renforcement dite couche de travail (6,7), **caractérisé en ce que** la couche complémentaire d'au moins un des pneumatiques s'étend jusqu'au moins une extrémité axiale de la couche de sommet de travail axialement la plus large.

8. Véhicule selon l'une des revendications précédentes, la structure de renfort de type carcasse d'au moins un des pneumatiques comportant au moins une nappe d'éléments de renforcement présentant un retournement autour d'une tringle, **caractérisé en ce que** l'extrémité radialement intérieur d'au moins une couche complémentaire est positionnée axialement entre la nappe d'éléments de renforcement et son retournement.

9. Véhicule selon l'une des revendications précédentes, **caractérisé en ce qu'**au moins un des pneumatiques comporte, dans une partie de chaque flanc, une unique couche complémentaire.

10. Véhicule selon l'une des revendications 1 à 8, **caractérisé en ce qu'** au moins un des pneumatiques comporte au moins deux couches complémentaires et **en ce que** les éléments de renforcements des deux couches complémentaires sont orientés dans le même sens par rapport à la direction circonférentielle.

11. Véhicule selon l'une des revendications précédentes, chacun des pneumatiques comportant sous la bande de roulement une structure de renforcement de sommet constituée d'au moins une couche d'éléments de renforcement dite couche de travail, **caractérisé en ce que** la structure de renforcement de sommet d'au moins un des pneumatiques comporte au moins deux couches d'éléments de renforcement et **en ce que** d'une couche à la suivante les éléments de renforcement forment entre eux des angles compris entre 20 et 160°.

12. Véhicule selon l'une des revendications précédentes, **caractérisé en ce que** les éléments de renforcement de la structure de renfort de type carcasse d'au moins un des pneumatiques font avec la direction circonférentielle un angle compris entre 65° et 90°.

13. Véhicule selon l'une des revendications précédentes, **caractérisé en ce que** la structure de renforcement de sommet d'au moins un des pneumatiques comporte au moins une couche d'éléments de renforcement circonférentiels.

14. Véhicule selon l'une des revendications précédentes, **caractérisé en ce que** la structure de renfort de type carcasse d'au moins un des pneumatiques est réalisée de deux demi-couches.

## Claims

1. Vehicle of motorcycle type having two axle systems each equipped with a mounted assembly consisting of a wheel and a tyre (1), each of the tyres comprising at least one reinforcing structure of carcass type (2), formed by reinforcing elements, anchored on each side of the tyre to a bead (3), each bead extending radially outward through a sidewall (4), the sidewalls joining radially outward with a tyre tread (5), each of the tyres comprising, at least in a part of each sidewall, at least one additional layer (9) of reinforcing elements (29, 39) that is axially adjacent to the carcass-type reinforcing structure, the reinforcing elements of the additional layer forming, with the circumferential direction, an angle of between 20° and 60°, the orientation of the reinforcing elements of the additional layer in a sidewall being symmetrical to the orientation of the reinforcing elements of the additional layer in the other sidewall in relation to the equatorial plane, **characterized in that** the angle (α) formed by the plane comprising a reinforcing element (29) of an additional layer of the tyre fitted on the rear axle system with a radial plane (210) comprising the radially inner end of said reinforcing element, is oriented in the direction of rotation of the mounted assembly corresponding to the forward movement of the vehicle and **in that** the angle (β) formed by the plane comprising a reinforcing element (39) of an additional layer of the tyre fitted on the front axle system with a radial plane (310) comprising the radially inner end of said reinforcing element, is oriented in the direction opposite to the direction of rotation of the mounted assembly corresponding to the forward movement of the vehicle.

2. Vehicle according to Claim 1, **characterized in that** the curvilinear abscissa of an additional layer of at least one of the tyres on a mid-plane cross-section of the tyre is greater than 20 mm.

3. Vehicle according to Claim 1 or 2, **characterized in that** the additional layer of at least one of the tyres extends at least from the radially outer end of the anchoring area of the carcass-type reinforcing structure in a bead.

4. Vehicle according to one of Claims 1 to 3, **characterized in that** the additional layer of at least one of the tyres extends to at least one shoulder end.

5. Vehicle according to one of Claims 1 to 3, **characterized in that** the additional layer of at least one of the tyres extends to at least one point of tangency of the curvilinear abscissa of the carcass-type reinforcing structure with a perpendicular to the axis of rotation.

6. Vehicle according to one of Claims 1 to 5, **characterized in that** the additional layer of at least one of the tyres extends under the tyre tread.

7. Vehicle according to one of Claims 4 to 6, each of the tyres comprising, under the tyre tread, a crown reinforcing structure consisting of at least one layer of reinforcing elements called working layer (6, 7), **characterized in that** the additional layer of at least one of the tyres extends to at least one axial end of the axially widest working crown layer.

8. Vehicle according to one of the preceding claims, the carcass-type reinforcing structure of at least one of the tyres comprising at least one ply of reinforcing elements having a turn-up about a bead wire, **characterized in that** the radially inner end of at least one additional layer is positioned axially between the ply of reinforcing elements and its turn-up.

9. Vehicle according to one of the preceding claims, **characterized in that** at least one of the tyres comprises, in a part of each sidewall, a single additional layer.

10. Vehicle according to one of Claims 1 to 8, **characterized in that** at least one of the tyres comprises at least two additional layers and **in that** the reinforcing elements of the two additional layers are oriented in the same direction in relation to the circumferential direction.

11. Vehicle according to one of the preceding claims, each of the tyres comprising, under the tyre tread, a crown reinforcing structure consisting of at least one layer of reinforcing elements called working layer, **characterized in that** the crown reinforcing structure of at least one of the tyres comprises at least two layers of reinforcing elements and **in that** from one layer to the next, the reinforcing elements form between them angles of between 20 and 160°.

12. Vehicle according to one of the preceding claims, **characterized in that** the reinforcing elements of the carcass-type reinforcing structure of at least one of the tyres form with the circumferential direction an angle of between 65° and 90°.

13. Vehicle according to one of the preceding claims, **characterized in that** the crown reinforcing structure of at least one of the tyres comprises at least one layer of circumferential reinforcing elements.

14. Vehicle according to one of the preceding claims, **characterized in that** the carcass-type reinforcing structure of at least one of the tyres is produced from two half-layers.

## Patentansprüche

1. Fahrzeug von der Art Motorrad, das zwei Achsen aufweist, die je mit einer aus einem Rad und einem Luftreifen (1) bestehenden montierten Einheit ausgestattet sind, wobei jeder der Luftreifen mindestens eine Verstärkungsstruktur von der Art Karkasse (2) aufweist, die aus Verstärkungselementen geformt auf jeder Seite des Luftreifens an einem Wulst (3) verankert ist, wobei jeder Wulst sich radial nach außen durch eine Flanke (4) verlängert, wobei die Flanken radial nach außen an einen Laufstreifen (5) anschließen, wobei jeder der Luftreifen mindestens in einem Teil jeder Flanke mindestens eine komplementäre Schicht (9) von Verstärkungselementen (29, 39) aufweist, die axial der Verstärkungsstruktur vom Typ Karkasse benachbart ist, wobei die Verstärkungselemente der komplementären Schicht mit der Umfangsrichtung einen Winkel zwischen 20° und 60° bilden, wobei die Ausrichtung der Verstärkungselemente der komplementärem Schicht in einer Flanke zur Ausrichtung der Verstärkungselemente der komplementären Schicht in der anderen Flanke bezüglich der Äquatorialebene symmetrisch ist, **dadurch gekennzeichnet, dass** der Winkel (α), der von der ein Verstärkungselement (29) einer komplementären Schicht des die Hinterachse bestückenden Luftreifens enthaltenden Ebene mit einer radialen Ebene (210) gebildet wird, die das radial innere Ende des Verstärkungselements enthält, in der der Vorwärtsbewegung des Fahrzeugs entsprechenden Drehrichtung der montierten Einheit ausgerichtet ist, und dass der Winkel (β), der von der ein Verstärkungselement (39) einer komplementären Schicht des die Vorderachse bestückenden Luftreifens enthaltenden Ebene mit einer radialen Ebene (310) gebildet wird, die das radial innere Ende des Verstärkungselements enthält, in zur der Vorwärtsbewegung des Fahrzeugs entsprechenden Drehrichtung entgegengesetzten Richtung der montierten Einheit ausgerichtet ist.

2. Fahrzeug nach Anspruch 1, **dadurch gekennzeichnet, dass** die gekrümmte Abszisse einer komplementären Schicht mindestens eines der Luftreifen auf einem Meridianschnitt des Luftreifens größer als 20 mm ist.

3. Fahrzeug nach Anspruch 1 oder 2, **dadurch gekennzeichnet, dass** die komplementäre Schicht mindestens eines der Luftreifen sich mindestens von dem radial äußeren Ende der Verankerungszone der Verstärkungsstruktur vom Typ Karkasse in einem Wulst erstreckt.

4. Fahrzeug nach einem der Ansprüche 1 bis 3, **dadurch gekennzeichnet, dass** die komplementäre Schicht mindestens eines der Luftreifen sich bis mindestens zu einem Schulterende erstreckt.

5. Fahrzeug nach einem der Ansprüche 1 bis 3, **dadurch gekennzeichnet, dass** die komplementäre Schicht mindestens eines der Luftreifen sich bis zu mindestens einem Tangierungspunkt der gekrümmten Abszisse der Verstärkungsstruktur vom Typ Karkasse mit einer Lotrechten zur Drehachse erstreckt.

6. Fahrzeug nach einem der Ansprüche 1 bis 5, **dadurch gekennzeichnet, dass** die komplementäre Schicht mindestens eines der Luftreifen sich unter dem Laufstreifen erstreckt.

7. Fahrzeug nach einem der Ansprüche 4 bis 6, wobei jeder der Luftreifen unter dem Laufstreifen eine Scheitelverstärkungsschicht aufweist, die aus mindestens einer Arbeitsschicht genannten Schicht von Verstärkungselementen (6, 7) besteht, **dadurch gekennzeichnet, dass** die komplementäre Schicht mindestens eines der Luftreifen sich bis zu mindestens einem axialen Ende der axial breitesten Arbeitsscheitelschicht erstreckt.

8. Fahrzeug nach einem der vorhergehenden Ansprüche, wobei die Verstärkungsstruktur vom Typ Karkasse mindestens eines der Luftreifen mindestens eine Lage von Verstärkungselementen aufweist, die einen Umschlag um einen Wulstkern aufweist, **dadurch gekennzeichnet, dass** das radial innere Ende mindestens einer komplementären Schicht axial zwischen der Lage von Verstärkungselementen und ihrem Umschlag positioniert ist.

9. Fahrzeug nach einem der vorhergehenden Ansprüche, **dadurch gekennzeichnet, dass** mindestens einer der Luftreifen in einem Teil jeder Flanke eine einzige komplementäre Schicht aufweist.

10. Fahrzeug nach einem der Ansprüche 1 bis 8, **dadurch gekennzeichnet, dass** mindestens einer der Luftreifen mindestens zwei komplementäre Schichten aufweist, und dass die Verstärkungselemente der zwei komplementären Schichten in der gleichen Richtung bezüglich der Umfangsrichtung ausgerichtet sind.

11. Fahrzeug nach einem der vorhergehenden Ansprüche, wobei jeder der Luftreifen unter dem Laufstreifen eine Scheitelverstärkungsstruktur aufweist, die aus mindestens einer Arbeitsschicht genannten Schicht von Verstärkungselementen besteht, **dadurch gekennzeichnet, dass** die Scheitelverstärkungsstruktur mindestens eines der Luftreifen mindestens zwei Schichten von Verstärkungselementen aufweist, und dass die Verstärkungselemente von einer Schicht zur nächsten Winkel zwischen 20 und 160° bilden.

12. Fahrzeug nach einem der vorhergehenden Ansprüche, **dadurch gekennzeichnet, dass** die Verstärkungselemente der Verstärkungsstruktur vom Typ Karkasse mindestens eines der Luftreifen mit der Umfangsrichtung einen Winkel zwischen 65° und 90° bilden.

13. Fahrzeug nach einem der vorhergehenden Ansprüche, **dadurch gekennzeichnet, dass** die Scheitelverstärkungsstruktur mindestens eines der Luftreifen mindestens eine Schicht von Umfangsverstärkungselementen aufweist.

14. Fahrzeug nach einem der vorhergehenden Ansprüche, **dadurch gekennzeichnet, dass** die Verstärkungsstruktur vom Typ Karkasse mindestens eines der Luftreifen aus zwei Halbschichten hergestellt ist.
